Europäisches Patentamt

European Patent Office

Office européen des brevets

(11) Publication number: **0 112 248**
**B1**

(12) **EUROPEAN PATENT SPECIFICATION**

(45) Date of publication of patent specification: **04.02.87**

(21) Application number: **83402412.7**

(22) Date of filing: **13.12.83**

(51) Int. Cl.⁴: **G 01 B 7/10, E 21 B 47/08**

(54) Method and apparatus for electrically determining pipe inside diameter.

(30) Priority: **13.12.82 US 449016**
**13.12.82 US 449015**

(43) Date of publication of application:
**27.06.84 Bulletin 84/26**

(45) Publication of the grant of the patent:
**04.02.87 Bulletin 87/06**

(84) Designated Contracting States:
**DE FR GB IT NL**

(56) References cited:
**GB-A-2 037 439**
**US-A-3 405 349**
**US-A-3 417 325**
**US-A-3 532 969**
**US-A-3 727 126**

(73) Proprietor: **Schlumberger Limited**
**277 Park Avenue**
**New York, N.Y. 10172 (US)**
㊴ **DE GB NL**

(73) Proprietor: **SOCIETE DE PROSPECTION**
**ELECTRIQUE SCHLUMBERGER**
**42, rue Saint-Dominique**
**F-75340 Paris Cedex 07 (FR)**
㊴ **FR IT**

(72) Inventor: **Minerbo, Gerald N.**
**2314 Canyon Meadows Drive**
**Missouri City Texas 77480 (US)**
Inventor: **McCann, Bruce R.**
**44 Bis, Blvd Suchet**
**F-75016 Paris (FR)**
Inventor: **Hazen, Gary A.**
**5918 Duxbury**
**Houston Texas 77035 (US)**

(74) Representative: **Chareyron, Lucien et al**
**Schlumberger Limited Service Brevets c/o Giers**
**12, place des Etats Unis B.P. 121**
**F-92124 Montrouge Cédex (FR)**

Courier Press, Leamington Spa, England.

# 0 112 248

**Description**

Background of the invention
Field of the invention

This invention relates generally to a method and apparatus for electromagnetically measuring the inside diameter of a cylindrical structure and particularly relates to an electronic inside pipe caliper. More particularly, the invention relates to a method and apparatus for logging the inside diameter of oil and gas well tubular members, e.g., casing.

Description of the prior art

It is frequently necessary to measure the inside diameter of a pipe. This is particularly true of the casing of un oil well or of a string of tubing disposed within an oil well, for example, to extract oil or gas from the well.

Such metallic pipes are buried in the ground and, therefore, are not accessible for measurement. Both the inside and the outside of each metallic pipes is subject to corrosion damage. The corrosion may be caused by injected fluids or by corrosive fluids within the ground. Besides, the pipe may be subjected to internal wear from the rods of pumps or from wear due to wire lines which may be sent into the well. Also, wear may be caused by drilling or fishing operations utilizing a drill pipe.

Measuring the damage of a pipe due to corrosion or wear is important in order to apply protective measures or to repair or replace the pipe when appopriate.

Of course, it should be realized that the internal diameter of the pipe in an oil well may vary due to permissible deviations of the wall thickness and of the nominal pipe diameter.

Because there is a real need to determine the inside diameter of buried metallic pipes, various instruments have been developed in the past for this purpose. Most of these instruments utilize mechanical feelers which are urged by spring means against the inner wall of the pipe. When one of the feelers is deflected due to the existence of pits, cracks, and other effects of corrosion or erosion of the pipe, an electric signal may be generated which is utilized to record such deviation. This may, for example, be effected by associating a magnet with the feelers. The magnet is rotated sequentially past the various feelers so that a deflection of the feeler changes the magnetic reluctance of the magnetic path which, in turn, induces an electrical signal that can be recorded. Alternatively, a potentiometer may be associated with a feeler for generating a signal proportional to the deflection of the feeler.

Some of these mechanical feeler calipers, utilize two sets of feelers, one for measuring the maximum penetration of the feeler, while the other continuously measures the average penetration of the feelers.

However, a pipe caliper of the type having mechanical feelers has a number of disadvantages. For example, such an instrument cannot detect longitudinal splits or cracks of the pipe. The pipe may be covered with paraffin, scale or other non-metallic material which may cover up faults in the pipe. The feeler, of course, cannot distinguish between a metallic pipe and non-metallic material which may cover the pipe. Therefore, certain pits covered by hardened hydrocarbons and the like cannot be detected.

Finally, each of the many feelers may scratch the pipe or scratch off the protective coating of the pipe. Even if the pipe has not been covered with a protective coating, the scratches caused by the feelers may initiate further corrosion. Consequently, the mechanical feeler-type instrument may cause change to the pipe inside diameter it is intended to measure.

U.S. Patent US—A—3,417,325 issued to McCullough and Stroud discloses a purely electrical caliper for determining the inside diameter of a metallic pipe in which a transmitter coil and receiver coil are supported on a cylindrical housing of a sonde adapted for movement through oil well casings and the like. The transmitter is excited with a.c. current of the order of 10 to 50 KHz. The voltage induced in the receiver coil is taken as a measure of the average inside diameter of the pipe being measured.

It has been found in practice, however, that the apparatus disclosed in U.S. Patent US—A—3,417,325 yields erroneous results where either the conductivity, or permeabilty or both conductivity and permeability of the pipe being measured vary. In actual oil field practice the conductivity of steel tubular goods varies from a range of $2.6 \times 10^6 \ \Omega^{-1} \times m^{-1}$ to $7.8 \times 10^6 \ \Omega^{-1} \times m^{-1}$. Also, as is well known, the permeability of oil field tubular goods varies significantly due to the mechanical shocks, heat treating, etc. to which the goods are subjected.

Thus, it is an object of this invention to provide an inside pipe caliper which operates on electrical principles which will overcome the disadvantages of prior instruments.

Another object of the invention is to provide an inside pipe caliper which generates a signal representative of the inside diameter of the pipe which is substantially insensitive to variations of conductivity and permeability of the pipe.

Another object of this invention is to provide well logging apparatus for logging borehole casing or tubing which yields an accurate log of the inside diameter of the casing versus depth, regardless of variations of casing conductivity or permeability.

Summary of the invention

The objects, features and advantages of the invention are the result of providing two coaxial coils within the pipe including a transmitter coil in which is generated an a.c. exciting current, and a receiver coil

2

disposed a longitudinal distance from the transmitter coil for producing an induced voltage in response to the transmitter current. A circuit is provided to generate an impedance signal proportional to the ratio of the receiver voltage to the transmitter current. The impedance signal is resolved into its vector components including a quadrature impedance signal and an inphase impedance signal.

According to one aspect of the invention as outlined in claim 1, means responsive to the quadrature and the inphase impedance signals are provided to generate a corrected measurement output. This corrected measurement output is used to generate a signal representative of the inside diameter of the pipe.

According to one embodiment of the invention, means are provided for linearly combining the quadrature and the inphase impedance signals to generate a corrected measurement output having a lessened sensitivity to the permeability and conductivity of metallic objects.

According to another embodiment of the invention, means are provided for simultaneously solving two non-linear equations which express the quadrature and inphase impedance siganls as functions of $a_1$, the inside radius of the pipe, and $\tau$, a parameter proportional to the ratio of the permeability of the pipe to the conductivity of the pipe.

According to yet another embodiment of the invention there is provided an iterative computing method for simultaneously solving the two equations by first assuming that $\tau$ is equal to zero, then determining an estimate of $a_1$ from the first equation, determining $\tau$ from the second equation, using the new $\tau$ value in the first equation to determine a new value of $a_1$ and repeating the method until convergence is achieved.

According to a second aspect of the invention a method of measuring the inside diameter of a metallic pipe is outlined in claim 10.

Brief description of the drawings

The invention, as well as additional objects and advantages thereof will best be understood from the following description when read in connection with the accompanying drawings, in which:

Figure 1 schematically illustrates the downhole apparatus and surface instrumentation for a tubular goods calipar according to the invention;

Figure 2 illustrates a theoretical model of transmitter and receiver coils for measuring the inside diameter of a metallic tubular member;

Figure 3 illustrates electronic apparatus suitable for perfoming the measurement according to the invention;

Figures 4A and 4B illustrate the error correcting efficiency according to one form of the invention; and

Figure 5 illustrates the effect of first and second order corrections for pipes of varying inside diameters as a function of the ratio of permeability to conductivity of the pipes.

Decription of the invention

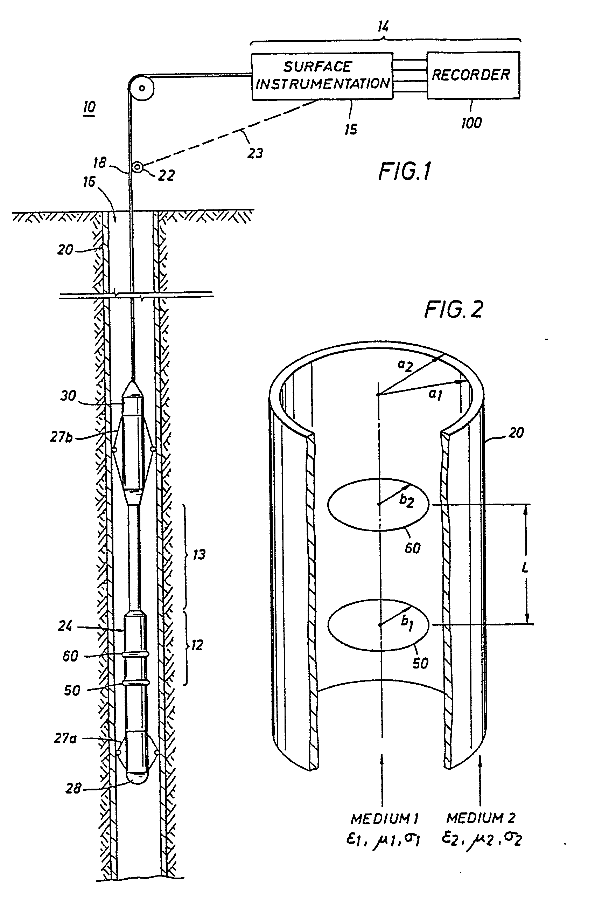

Figure 1 shows schematically an electrical caliper tool 10 constructed in accordance with the invention. The tool 10 determines the inside diameter of tubular members, shown illustratively as casing 20 of borehole 16.

The tool includes a downhole sonde 12, downhole electronic cartridge 13, and surface equipment 14. The sonde 12 is adapted to be suspended in and movable through the tubular member or casing 20 by an armored cable, or wireline 18. The well bore 16 has a casing 20 having an inside diameter which the tool 10 is designed to measure as a function of well depth as the tool is raised or lowered within the casing 20. The wireline or cable 18 may be a single conductor (referred to as mono-cable) or multi-conductor (which may be a heptacable having seven conductors).

The surface equipment 14 communicates with the sonde 12 via the cable 18 for the purposes of controlling the position of the sonde 12 within the casing 20 and for receiving, processing, displaying, and recording signals transmitted from the sonde 12.

A cable-following mechanical transducer 22 and linkage 23 provides position signals indicative of the depth of the sonde 12 in the well bore 16. Typically, the transducer 22 takes the form of a calibrated pressure wheel urged against the wireline 18 and generates electrical pulses as the wheel rotates due to travel of the sonde 12 within the casing.

The down hole tool comprises a sonde 12, an electronic cartridge section 13, a pair of centralizers 27a, 27b, a tip or nose member 28 and a cable head adapter 30. The down hole tool is connected to the cable 18 via the cable head adapter 30.

The sonde 12 contains caliper coils 50, 60 for making electromagnetic measurements as a function of depth of the sonde in the casing. A signal is generated which is proportional to casing inside diameter. Other signals are generated which are representative of the ratio of casing permeability to casing conductivity.

Before specific apparatus is described which reside in electronic cartridge 13 or surface apparatus 14, reference is made to Figure 2 for an exposition of the theoretical basis of the invention.

Figure 2 shows a theoretical model of two coaxial coils 50, 60 separated from one another by a longitudinal distance L, both coils disposed coaxially within pipe or casing 20. The pipe inside radius is represented by $a_1$, its outside radius by $a_2$. The radius of receiver coil 60 is represented by $b_2$; the raduis of

transmitter coil 50 is represented by $b_1$. The electrical properties of medium 1 inside the pipe are $\varepsilon_1$, $\mu_1$, $\sigma_1$, the permittivity, the permeability and the conductivity of the medium. Likewise, the properties of the pipe are represented by $\varepsilon_2$, $\mu_2$, $\sigma_2$.

Using Figure 2 as the basis for application of Maxwell's equations, it can be shown that

$$Z = \frac{V}{J} \qquad (1)$$

where Z represents the impedance ratio of the coils 60, 50, and V represents the voltage induced in receiver coil 60 in response to current J flowing in coil 50. The impedance Z can be written as

$$Z = Z_0 + Z_p \qquad (2)$$

where $Z_0$ is that part of the impedance caused by direct coupling between transmitter and receiver coils and $Z_p$ is that part of the impedance caused by the effect of the pipe 20.

It can be shown that

$$Z_0 = -2i\omega\mu_1 b_1 b_2 \int_0^\infty I_1(\lambda b_2) K_1(\lambda b_1) \cos\lambda L \, d\lambda \qquad (3)$$

$$Z_p = -2i\omega\mu_1 b_1 b_2 \int_0^\infty I_1(\lambda b_1) I_1(\lambda b_2) \Gamma_1(\lambda) \cos\lambda L \, d\lambda \qquad (4)$$

where

$$\Gamma_1(\lambda) = -\frac{K_1(\lambda a_1) - \lambda a_1 T K_0(\lambda a_1)}{I_1(\lambda a_1) + \lambda a_1 T I_0(\lambda a_1)} \qquad (5)$$

$$i = \sqrt{-1}$$

$$T = \frac{1-i}{\sqrt{2}} \frac{\mu_2}{\mu_1} \frac{1}{a_1\sqrt{\sigma_2\mu_2\omega}} - \frac{i}{2} \frac{1}{\sigma_2\mu_1\omega a_1^2} + \ldots \qquad (6)$$

and where $I_1$, $K_1$, $I_0$, $K_0$, are Bessel functions.

Equation (4) can be expanded using equation (5) for $\Gamma$ and equation (6) for T,

$$Z_p = Z_1 + Z_2 + Z_3 + \ldots \qquad (7)$$

$$\left.\begin{array}{l} Z_1 = +2i\omega\mu_1 b_1 b_2 \int_0^\infty I_1(\lambda b_1) I_1(\lambda b_2) \dfrac{K_1(\lambda a_1}{I_1(\lambda a_1)} \cos\lambda L \, d\lambda \\[3em] Z_2 = -2i\omega\mu_1 B_1 b_2 T \int_0^\infty \dfrac{I_1(\lambda b_1) I_1(\lambda b_2)}{I_1{}^2(\lambda a_1)} \cos\lambda L \, d\lambda \\[3em] Z_3 = +2i\omega\mu_1 b_1 b_2 T^2 \int_0^\infty \dfrac{\lambda a_1 I_1(\lambda b_1) I_1(\lambda b_1) I_0(\lambda a_1)}{I_1{}^3(\lambda a_1)} \cos\lambda L \, d\lambda \end{array}\right\} \qquad (8)$$

Where the conductivity of the pipe is large,

$$T = \frac{1-i}{\sqrt{2}} \frac{\mu_2}{\mu_1} \frac{1}{a_1\sqrt{\sigma_2\mu_2\omega}} \qquad (9)$$

The measured impedance between the coils, $Z_{meas}$, has real and imaginary (quadrature) parts,

$$Z_{meas} = ReZ_{meas} + iImZ_{meas} \qquad (10)$$

Thus, for small T, $T^2$ is very small and $Z_3 = 0$,

$$ReZ_{meas} + iImZ_{meas} = i(\,|\,Z_1\,| - |\,Z_0\,|\,) + ReZ_2 + iImZ_2$$

$ReZ_{meas} = ReZ_2 = ImZ_2$ because from (9) T has equal real and quadrature parts.

Therefore,

$$ImZ_{meas}= | Z_1 | - | Z_0 | +ReZ_{meas} \tag{11}$$

or

$$\Delta Z=ReZ_{meas}=ImZ_{meas}= | Z_0 | - | Z_1 | \tag{12}$$

Equation 12 indicates that

$$\Delta Z=ReZ_{meas}-ImZ_{meas}=2\omega\mu_0 b^2(ZINT0-ZINT1) \tag{13}$$

where the coils 50 and 60 are of the same diameter b, the medium 1 permeability is that of free space $\mu_0$ and

$$\left. \begin{array}{l} ZINT0=\int_0^\infty I_1(\lambda b)K_1(\lambda b)\cos\lambda L d\lambda \\ \\ \text{and} \\ \\ ZINT1=\int_0^\infty I_1^2(\lambda b)\dfrac{K_1(\lambda a_1)}{I_1(\lambda a_1)}\cos\lambda L d\lambda. \end{array} \right\} \tag{14}$$

when T from equation 9 is not small enough to ignore, it can be shown that

$$\frac{ReZ-ImZ}{2\omega\mu_0 b^2}=(ZINT0-ZINT1)+\tau^2 ZINT3-\sqrt{2}\tau^3 ZINT4+\tau^4 ZINT5+... \tag{15}$$

$$\frac{ReZ}{2\omega\mu_0 b^2}=-\frac{\tau}{\sqrt{2}}ZINT2+\tau^2 ZINT3-\frac{\tau^3}{\sqrt{2}}ZINT4+...$$

where,

$$ZINT0=\int_0^\infty I_1(\lambda b)K_1(\lambda b)\cos\lambda L d\lambda \tag{16}$$

$$ZINT1=\int_0^\infty I_1^2(\lambda b)\frac{K_1(\lambda a_1)}{I_1(\lambda a_1)}\cos\lambda L d\lambda \tag{17}$$

$$ZINT2=\int_0^\infty \frac{I_1^2(\lambda b)}{I_1^2(\lambda a_1)}\cos\lambda L d\lambda \tag{18}$$

$$ZINT3=\int_0^\infty \frac{(\lambda a_1)I_1^2(\lambda b)I_0(\lambda a_1)}{I_1^3(\lambda a_1)}\cos\lambda L d\lambda \tag{19}$$

$$ZINT4=\int_0^\infty \frac{(\lambda a_1)^2 I_1^2(\lambda b)I_0^2(\lambda a_1)}{I_1^4(\lambda a_1)}\cos\lambda L d\lambda \tag{20}$$

$$ZINT5=\int_0^\infty \frac{(\lambda a_1)^3 I_1(\lambda b)I_0^2(\lambda a_1)}{I_1^5(\lambda a_1)}\cos\lambda L d\lambda \tag{21}$$

$$\tau=\frac{1}{a_1}\left(\sqrt{\frac{1}{\omega\mu_0}}\right)\left(\sqrt{\frac{\mu_r}{\sigma}}\right) \tag{22}$$

where $a_1$ represents the inside radius of the pipe,
b represents the radius of the transmitter and receiver coils,
L is the distance between the transmitter coil and the receiver coil,
$I_1(\lambda b)$ is a modified Bessel function of the first kind,
$K_1(\lambda a_1)$ is a modified Bessel function of the second kind,

5

$I_0(\lambda a_1)$ is a modified Bessel function of the first kind,

$\lambda$ is a variable of integration,

$\omega_0$ is the permeability of free space,

$\omega=2\pi f$, is the radian frequency of the a.c. transmitter current,

$\mu_r$ is the relative permeability of the pipe being measured, and

$\sigma$ is the conductivity of the pipe being measured.

Thus, from equations (13) and (14) an accurate determination of $a_1$, the inside radius of the pipe 20, can be made by measuring the impedance between the coils, resolving the impedance into its quadrature (imaginary) and inphase (real) components, taking the difference between those components and determining $a_1$ which satisfies equation 14.

Advantageously, equation 14 may be precomputed for various $\Delta Z$ values as a function of $a_1$. A polynomial may be fitted to the functional relationship between $a_1$ and $\Delta Z$, or

$$a_1=f(\Delta Z). \tag{23}$$

The polynomial may be stored in the memory of a digital computer disposed in surface instrumentation 14, so that as $\Delta Z$ is measured as a function of depth in the well 16, $a_1$ may be easily determined.

Alternatively, equation (13) may be predetermined over a range of values of $\Delta Z$ and $a_1$ to produce a table of values which may be stored in a digital memory in surface instrumentation 14. The digital memory may then be addressed with a measured $\Delta Z$ value to generate a signal $a_1$ representative of the inside diameter of the pipe.

Where T is not small enough to neglect, equations 15 and 16 through 22 may be solved by first obtaining an initial estimate of $a_1$, the internal radius of the pipe, by assuming $\tau=0$. Next, using the initial estimates of $a_1$, ZINT2, ZINT3, ZINT4, and ZINT5 are evaluated (it is assumed $\tau$ is sufficiently small to ignore higher order factors in the expansion).

Then, $\tau$ from equation

$$\frac{ReZ}{2\omega\mu_0 b^2}=-\frac{\tau}{\sqrt{2}}ZINT2+\tau^2 ZINT3-\frac{\tau^3}{\sqrt{3}}ZINT4$$

of equation 15 is determined. The new $\tau$ value is used in the equation

$$\frac{ReZ-ImZ}{2\omega\mu_0 b^2}=(ZINT0-ZINT1)+\tau^2 IZNT3-\sqrt{2}\tau^3 ZINT4+\tau^4 ZINT5+...$$

of equation 15.

The steps outlined above are repeated until values for $\tau$ and $a_1$ converge, that is until change is sufficiently small from one iteration to the next.

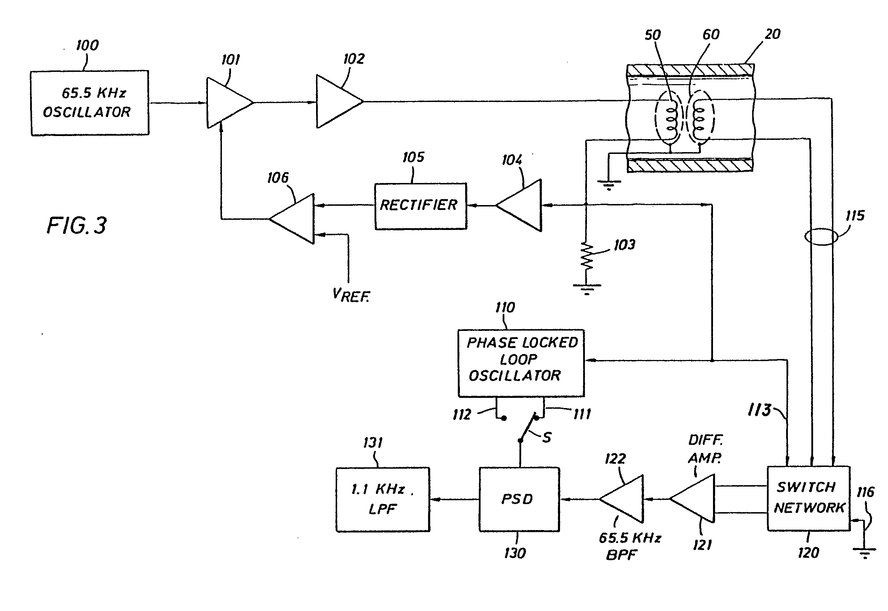

Figure 3 illustrates the electronic circuitry necessary to implement the invention. Caliper coils 50,60 are shown schematically within casing 20. Transmitter coil 50 is excited by means of a 65.5 kHz crystal oscillator via summing amplifier 101 and driver amplifier 102. In order to insure that a constant current excites transmitter coil 50, a current sensing resistor provides an output to sensing amplifier 104 proportional to the current through transmitter coil 50. The output of sensing amplifier 104 is applied to rectifier 105 where a rectified error signal is applied to a differential error amplifier 106 for comparison with a reference signal. The error signal from error amplifier 106 is fed back to summing amplifier 101, completing the feedback constant current circuit.

The signal from current sensing resistor 103 is applied to phase-locked loop oscillator 110 which generates reference signals in quadrature (e.g. 90° out of phase) with the transmitter current, on lead 111 and inphase (e.g., 180° out of phase) with transmitter current on lead 112. The current reference signal is also applied to switch network 120. A ground signal on lead 116 is additionally applied to switch network 120. Through switch network 120 it is possible to apply not only the received voltage on leads 115 to phase sensitive detector 130, but also a current signal on 113 and a ground signal 116, thereby providing ready means to calibrate the phase sensitive detector (PSD) 130 system for misalignment and drifts with temperature and time. The signal from switch network 120 is applied to PSD 130 via differential amplifier 121 and band pass filter 122 having a band pass frequency substantially the same as that of oscillator 100.

The output of the PSD 130 is applied to a low-pass filter 131, the output of which during logging operations is alternatively the inphase and quadrature components of the voltage signal indicated in coil 60 measured with respect to the phase of the current driving transmitter coil 50. Switch S is alternately connected to leads 111, 112 many times each second thereby producing many output readings each second, effectively insuring that for each depth location that coils 50, 60 are measuring, several outputs of the inphase and quadrature components are available for further processing as described previously to generate an inside diameter measurement and a $\tau$ measurement indicative of the ratio of pipe permeability to conductivity.

6

# 0 112 248

The circuitry of Figure 3 is preferably disposed in electronic cartridge 13, but may alternatively partially or totally reside in surface instrumentation, except input and output leads to coils 50 and 60. Preferably signals from the phase sensitive detector 130 are applied to surface instrumentation circuits 14 by means of telemetry circuits downhole and demodulation circuits uphole similar to that shown in U.S. Patent US—A—4,292,588 issued to Smith and incorporated herein.

Coils 50 and 60 may be shielded in a conventional manner so as to prevent electric field coupling where logging is occurring in a salt-water filled environment.

Well logs of casing inside diameter are effected through the apparatus shown in Figures 1 and 3 and the processing steps outlined above are preferably carried out in surface instrumentation 14. Logs are generated by correlating the depth signals of the coils 50, 60 through the use of measurement wheel 22 schematically shown connected to surface instrumentation 15, well known in the well logging art. A recorder 100 is provided for producing logs of casing inside diameter versus depth of the coils 50, 60. The parameter τ proportional to the permeability-conductivity ratio may also be recorded as a function of logging depth.

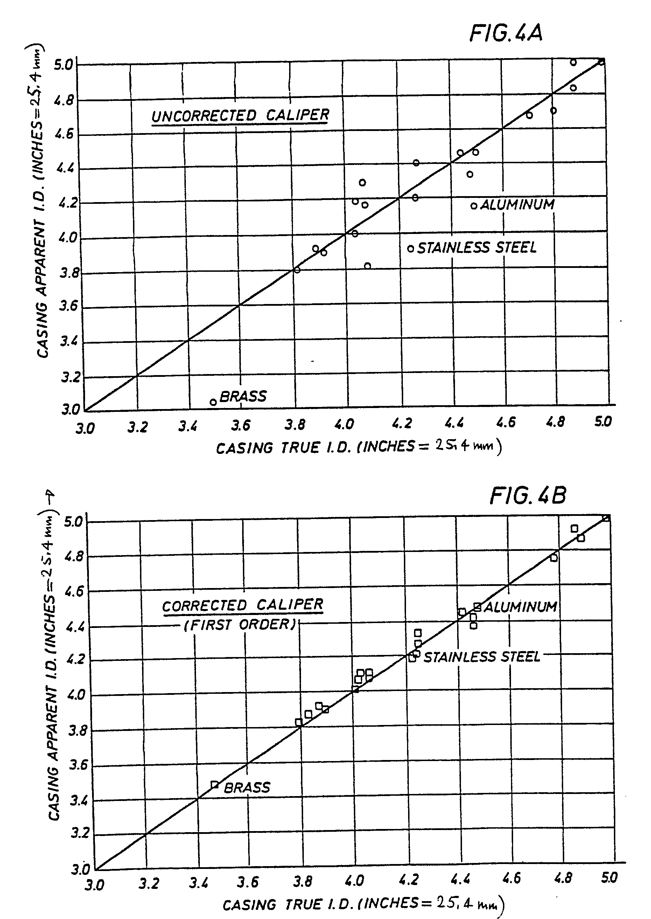

Figures 4A and 4B illustrate the efficacy of the invention in producing measurements of the inside diameter of tubular goods having wide variations in conductivity. Figure 4A shows that significant errors result in the apparent inside diameter of pipe for tubular brass, stainless steel, aluminum and other ferrous pipes having different permeability-conductivity ratios. The results of Figure 4A were generated in the prior known way of estimating inside diameter purely on the basis of the magnitude of received voltage of receiver coil 60. Figure 4B shows that by providing the corrections indicated by equations 13 and 14 above, errors to the estimate of pipe inside diameter are significantly reduced.

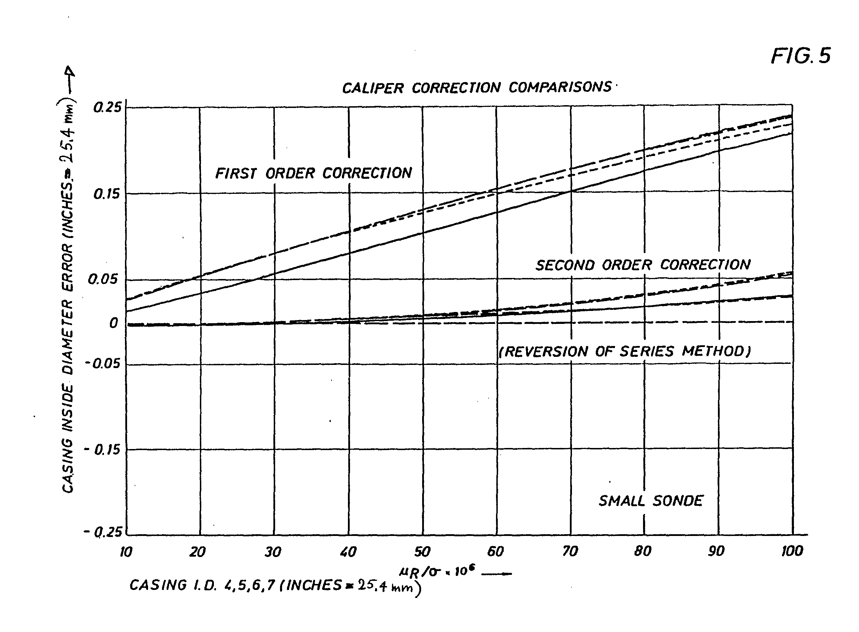

Figure 5 illustrates the error expected in the measurement using the first order correction of equations 13 and 14 and the scond order correction of equations 15 through 22. The error curves are presented as a function of $\mu/\sigma$ of the tube under investigation and shows curves of casing inside diameters of 4, 5, 6, and 7 inches (i.e. 101.6, 127, 152.4 and 177.8 mm). It is seen that substantial reduction in casing inside diameter errors are achieved for large $\mu/\sigma$ ratios.

Although the invention has been described in its preferred form with a certain degree of particularity, the present disclosure has been made only by way of example. Changes in the details and impementation of the preferred embodiment will be apparent without departing from the spirit and the scope of the invention. Even though the invention is described specifically for the casing inside diameter measurement of casings in down hole oil or gas wells, the invention could find ready application for the inside diameter measurement of any pipe for which access to the inside is the only practical measurement. The invention described herein could find ready application for the measurement of oil and gas pipe lines for example.

## Claims

1. Apparatus for measuring the inside diameter of a metallic pipe (20) comprising:
a support member;
transmitter means including a transmitter coil (50) disposed on said support member for generating an a.c. transmitter current; and
receiver means including a receiver coil (60) disposed on said support member a distance from said transmitter coil for producing a receiver voltage in response to said transmitter current when the transmitter and receiver coils are disposed within such a pipe; and characterized by:
means responsive to said receiver means and said transmitter means for generating an impedance signal proportional to the ratio of said receiver voltage to said transmitter current;
means for resolving said impedance signal into its quadrature component, ImZ, and its inphase component, ReZ;
means responsive to said ImZ and ReZ components for generating a corrected measurement output; and
means responsive to said corrected measurement output for generating a signal representative of the inside diameter of the pipe.

2. The apparatus of claim 1 characterized in that said corrected measurement output generating means comprises means for linearly combining said ImZ and ReZ components to generate a corrected measurement output having a lessened sensitivity to the permeability and conductivity of metallic objects.

3. The apparatus of claim 2 characterized in that said means for linearly combining comprises subtraction means for generating a difference signal indicative of the difference between said ImZ and ReZ components.

4. The apparatus of any one of claims 1—3 characterized in that said means for generating said inside diameter of the pipe signal comprises means for filtering said corrected measurement output.

5. The apparatus of claim 3 characterized in that said means for generating a signal indicative of the inside diameter of the pipe includes:
means for storing numerical indications of the inside diameter of said pipe as a function of said difference signal, and
means for addressing said storing means with said difference signal to generate an inside diameter signal proportional to the inside diameter of said pipe.

7

6. The apparatus of claim 1 characterized in that said corrected measurement output generating means comprises means for filtering said ImZ and ReZ components based on a model for the respective components which expresses each component as a non-linear combination of at least two characteristics of said metallic pipe.

7. The apparatus of claim 6 characterized in that said filtering means comprises means for simultaneously solving two non-linear equations which express said ImZ component and said ReZ component as functions of $a_1$ and $\tau$, where $a_1$ represents the inside radius of the pipe and $\tau$ is a factor proportional to the ratio of the permeability of the pipe to the conductivity of the pipe.

8. The apparatus of any one of claims 1, 6 or 7 characterized in that said means responsive to said corrected measurement output further generates a signal indicative of the ratio of permeability to conductivity of the pipe.

9. The apparatus of any one of claims 1—8 characterized in that said apparatus comprises a well logging device;

said metallic pipe comprises a well bore casing;

said support member is adapted for traversing the well bore casing;

said transmitter and receiver coils are coaxially disposed on said support member; and

said transmitter and receiver means are connected to surface instrumentation via a wireline cable; and further comprising

means for moving said support member axially within the pipe; and

means for recording said signal representative of the inside diameter of the pipe as a function of distance along the pipe;

the frequency of said a.c. transmitter current being about 65 KHz.

10. A method of measuring the inside diameter of a metallic pipe comprising the steps of

generating an impedance signal between two coaxial coils within said pipe, where the impedance is the ratio between the current exciting a transmitter coil and the voltage induced in a receiver coil,

resolving the impedance signal into its vector components including a quadrature impedance signal and an inphase impedance signal,

generating a difference signal, $\Delta Z$, proportional to the difference in magnitudes of said quadrature impedance signal and said inphase impedance signal,

generating an inside diameter signal representative of the inside diameter of the pipe in response to at least said difference signal $\Delta Z$.

11. The method of claim 10 wherein said step of generating an inside diameter signal comprises simultaneously solving two non-linear equations which express the magnitude of said quadrature impedance signal and said inphase impedance signal as functions of $a_1$ and $\tau$, where $a_1$ represents the inside radius of the pipe and $\tau$ is a factor proportional to the ratio of the permeability of the pipe to the conductivity of the pipe.

12. The method of claim 11 wherein said step of simultaneously solving two equations comprises:

a) estimating $a_1$, the inside radius of the pipe, by assuming $\tau=0$,

b) using the estimated $a_1$ to determine $\tau$ from the second equation,

c) using the new $\tau$ value in the first equation to determine an improved estimate of $a_1$, and

d) repeating steps b and c until the values for $\tau$ and $a_1$ converge.

13. The method of any one of claims 10—12 further comprising the steps of:

moving the transmitter coil and the receiver coil as a unit axially within the pipe,

recording said inside diameter signal as a function of distance along the pipe; and

recording a signal proportional to the ratio of permeability to conductivity as a function of distance along the pipe.


**Patentansprüche**

1. Vorrichtung zum Messen des Innendurchmessers eines Metallrohres (20), umfassend

einen Träger,

eine Sendeeinrichtung mit einer auf dem Träger angeordneten Sendespule (50) zum Erzeugen eines Sendewechselstromes und

eine Empfangseinrichtung mit einer auf dem Träger in einem Abstand von der genannten Sendespule angeordneten Empfangsspule zum Erzeugen einer Empfangsspannung in Abhängigkeit von dem Sendestrom, wenn die Sendespule und die Empfangsspule innerhalb eines solchen Rohres angeordnet sind,

gekennzeichnet durch

eine auf die Empfangseinrichtung und die Sendeeinrichtung ansprechende Einrichtung zum Erzeugen eines Impedanzsignals proportional dem Verhältnis der Empfangsspannung zu dem Sendestrom,

eine Einrichtung zum Auflösen des Impedanzsignals in seine Quadraturkomponente ImZ und seine in Phase liegende Komponente ReZ,

eine auf die ImZ-Komponente und die ReZ-Komponente ansprechende Einrichtung zum Erzeugen eines korrigierten Meßausgang, und

**0 112 248**

eine auf den korrigierten Meßausgang ansprechende Einrichtung zum Erzeugen eines Signals, das repräsentativ ist für den Innendurchmesser des Rohres.

2. Die Vorrichtung nach Anspruch 1, dadurch gekennzeichnet, daß die Einrichtung zum Erzeugen eines korrigierten Meßausgangs Mittel umfaßt für die lineare Kombination der ImZ-Komponente und der ReZ-Komponente zum Erzeugen eines korrigierten Meßausgangs mit einer herabgesetzten Empfindlichkeit gegenüber der Permeabilität und der Leitfähigkeit metallischer Objekte.

3. Die Vorrichtung nach Anspruch 2, dadurch gekennzeichnet, daß die Mittel für das lineare Kombinieren Subtrahiermittel umfassen zum Erzeugen eines Differenzsignals, das indikativ ist für die Differenz zwischen der ImZ-Komponente und der ReZ-Komponente.

4. Die Vorrichtung nach einem der Ansprüche 1 bis 3, -dadurch gekennzeichnet, daß die Einrichtung zum Erzeugen eines Rohrinnendurchmessersignals Mittel zum Filtern des korrigierten Meßausgangs umfaßt.

5. Die Vorrichtung nach Anspruch 3, dadurch gekennzeichnet, daß die Mittel zum Erzeugen eines für den Innendurchmesser des Rohres indikativen Signals umfassen:

Mittel zum Speichern numerischer Angaben bezüglich des Innendurchmessers des Rohres als eine Funktion des Differenzsignals und

Mittel zum Adressieren der Speichermittel mit dem Differenzsignal zum Erzeugen eines Innendurchmessersignals proportional dem Innendurchmesser des Rohres.

6. Die Vorrichtung nach Anspruch 1, dadurch gekennzeichnet, daß die Mittel zum Erzeugen des korrigierten Meßausgangs Mittel zum Filtern der ImZ-Komponente und der ReZ-Komponente umfassen, basierend auf einem Modell für die entsprechenden Komponenten, das jede Komponente als eine nichtlineare Kombination von mindestens zwei Kennwerten des metallischen Rohres ausdrückt.

7. Die Vorrichtung nach Anspruch 6, dadurch gekennzeichnet, daß die Filtermittel Mittel für gleichzeitiges Lösen zweier nichtlinearer Gleichungen umfassen, welche die ImZ-Komponente und die ReZ-Komponente als Funktionen von $a_1$ und $\tau$ ausdrücken, worin $a_1$ den Innendurchmesser des Rohres bedeutet und $\tau$ ein Faktor proportional dem Verhältnis der Permeabilität des Rohres zur Leitfähigkeit des Rohres ist.

8. Die Vorrichtung nach einem der Ansprüche 1, 6 oder 7, dadurch gekennzeichnet, daß die auf den korrigierten Meßausgang ansprechenden Mittel ferner ein Signal erzeugen, das indikativ ist für das Verhältnis der Permeabilität zur Leitfähigkeit des Rohres.

9. Die Vorrichtung nach einem der Ansprüche 1 bis 8, dadurch gekennzeichnet,

daß sie eine Bohrlochsonde umfaßt,

daß das Metallrohr eine Bohrlochauskleidung umfaßt,

daß der Träger in der Bohrlochauskleidung beweglich ist,

daß die Sendespule und die Empfangsspule koaxial auf dem Träger angeordnet sind und

die Sendeeinrichtung und die Empfangseinrichtung mit Oberflächengeräten über ein Leiterkabel verbunden sind, wobei ferner vorgesehen sind;

Mittel für das Verlagern des Trägers axial innerhalb des Rohres, und

Mittel für die Aufzeichnung des für den Innendurchmesser des Rohres repräsentativen Signals in Funktion des Abstandes längs des Rohres, wobei die Frequenz des Sendewechselstromes etwa 65 KHz beträgt.

10. Verfahren zum Messen des Innendurchmessers eines Metallrohres, umfassend die Schritte:

Erzeugen eines Impedanzsignals zwischen zwei koaxialen Spulen innerhalb des Rohres, wobei die Impedanz das Verhältnis zwischen dem eine Sendespule erregenden Strom und der in einer Empfangsspule induzierten Spannung ist,

Auflösen des Impedanzsignals in seine Vektorkomponenten mit einem Quadraturimpedanzsignal und einem in Phase liegenden Impedanzsignal,

Erzeugen eines Differenzsignals $\Delta Z$, proportional der Größendifferenz des Quadraturimpedanzsignals und des in Phase liegenden Impedanzsignals,

Erzeugen eines Innendurchmessersignals, das repräsentativ ist für den Innendurchmesser des Rohres im Ansprechen auf mindestens das genannte Differenzsignal $\Delta Z$.

11. Das Verfahren nach Anspruch 10, bei dem der genannte Schritt des Erzeugens eines Innendurchmessersignals das gleichzeitige Lösen zweier nichtlinearer Gleichungen umfaßt, welche die Größen des genannten Quadraturimpedanzsignals und des genannten in Phase liegenden Impedanzsignals als Funktionen von $a_1$ und $\tau$ ausdrücken, wobei $a_1$ den Innenradius des Rohres repräsentiert und $\tau$ ein Faktor proportional dem Verhältnis der Permeabilität des Rohres zur Leitfähigkeit des Rohres ist.

12. Das Verfahren nach Anspruch 11, bei dem der genannte Schritt des gleichzeitigen Lösens zweier Gleichungen umfaßt:

a) Abschätzen von $a_1$, dessen Innenradius des Rohres, durch Annahme von $\tau=0$,

b) Verwendung des geschätzten $a_1$ zum Bestimmen von $\tau$ aus der zeiten Gleichung,

c) Verwendung des neuen $\tau$-Wertes in der ersten Gleichung zum Bestimmen einer verbesserten Abschätzung von $a_1$ und

d) Wiederholen der Schritte b) und c), bis die Werte für $\tau$ und $a_1$ konvergieren.

13. Das Verfahren nach einem der Ansprüche 10 bis 12, ferner umfassend die Schritte:

Verlagern der Sendespule und der Empfangsspule als eine Einheit axial innerhalb des Rohres,

**0 112 248**

Aufzeichnen des Innendurchmessersignals als eine Funktion des Abstandes längs des Rohres, und Aufzeichnen des Signals, proportional dem Verhältnis der Permeabilität zur Leitfähigkeit als eine Funktion des Abstandes längs des Rohres.

## Revendications

1. Appareil pour mesurer le diamètre intérieur d'un tube métallique (20), comprenant:

— un élément de support,
— des moyens émetteurs comportant une bobine émettrice (50) placée sur cet élément de support pour produire un courant alternatif d'émission, et
— des moyens récepteurs comportant une bobine réceptrice (60) placée sur l'élément de support à une certaine distance de la bobine émettrice pour produire une tension de réception en réponse audit courant d'émission lorsque les bobines émettrice et réceptrice sont placées dans un tel puits, et caractérisé par:

— des moyens subordonnés aux moyens récepteurs et aux moyens émetteurs pour produire un signal d'impédance proportionnel au rapport de la tension de réception au courant d'émission,
— des moyens pour décomposer ce signal d'impédance en sa composante en quadrature ImZ et sa composante en phase ReZ,
— des moyens pour produire à partir de ces composantes ImZ et ReZ une mesure corrigée, et
— des moyens pour produire à partir de cette mesure corrigée un signal représentatif du diamètre intérieur du tube.

2. Appareil selon la revendication 1, caractérisé par le fait que lesdits moyens pour produire une mesure corrigée comprennent des moyens pour combiner linéairement lesdites composantes ImZ et ReZ en vue de produire une mesure corrigée ayant une sensibilité moindre à la perméabilité et la conductivité des objets métalliques.

3. Appareil selon la revendication 2, caractérisé par le fait que lesdits moyens pour combiner linéairement comprennent des moyens de soustraction en vue de produire un signal de différence indicatif de la différence entre les composantes ImZ et ReZ.

4. Appareil selon l'une des revendications 1 à 3, caractérisé par le fait que lesdits moyens pour produire ledit signal de diamètre intérieur du tube comprennent des moyens pour filtrer la mesure corrigée.

5. Appareil selon la revendication 3, caractérisé par le fait que lesdits moyens pour produire un signal indicatif du diamètre intérieur du tube comportent:

— des moyens pour stocker les indications numériques du diamètre intérieur du tube en fonction du signal de différence, et
— des moyens pour adresser lesdits moyens pour stocker à l'aide dudit signal de différence pour produire un signal de diamètre intérieur proportionnel au diamètre intérieur du tube.

6. Appareil selon la revendication 1, caractérisé par le fait que lesdits moyens pour produire la mesure corrigée comprennent des moyens pour filtrer lesdites composantes ImZ et ReZ sur la base d'un modèle des composantes respectives qui exprime chaque composante sous la forme d'une combinaison non linéaire d'au moins deux caractéristiques du tube métallique.

7. Appareil selon la revendication 6, caractérisé par le fait que les moyens pour filtrer comprennent des moyens pour résondre simultanément deux équations non linéaires qui expriment la composante ImZ et la composante ReZ en fonction de $a_1$ et $\tau$, $a_1$ étant le rayon intérieur du tube et $\tau$ un facteur proportionnel au rapport de la perméabilite à la conductivité du tube.

8. Appareil selon l'une des revendications 1, 6 et 7, caractérisé par le fait que lesdits moyens pour produire à partir de la mesure corrigée un signal représentatif du diamètre intérieur du tube, produisent en outre un signal indicatif du rapport de la perméabilité à la conductivité du tube.

9. Appareil selon l'une des revendications 1 à 8, caractérisé par le fait que cet appareil comprend un dispositif de diagraphie, le tube métallique comprend un cuvelage de puits, l'élément de support est conçu pour cheminer dans ce cuvelage de puits, les bobines émettrice et réceptrice sont disposées coaxialement sur l'élément de support, et les moyens émetteurs et récepteurs sont reliés à l'appareillage de surface par un câble métallique, et cet appareil comprend en outre des moyens de déplacement axial de l'élément de support dans le tube et des moyens d'enregistrement du signal représentatif du diamètre intérieur du tube en fonction de la distance le long du tube, la fréquence du courant alternatif d'émission étant d'environ 65 kHz.

10. Procédé de mesure du diamètre intérieur d'un tube métallique comprenant les opérations suivantes:

10

**0 112 248**

production d'un signal d'impédance entre deux bobines coaxiales placées dans le tube, l'impédance étant le rapport entre le courant d'excitation d'une bobine émettrice et la tension induite dans une bobine réceptrice,

décomposition de ce signal d'impédance en ses composantes vectorielles, à savoir un signal d'impédance en quadrature et un signal d'impédance en phase,

production d'un signal de différence $\Delta Z$ proportionnel à la différence des grandeurs du signal d'impédance en quadrature et du signal d'impédance en phase,

production d'un signal du diamètre intérieur représentatif du diamètre intérieur du tube à partir d'au moins ce signal différence $\Delta Z$.

11. Procédé selon la revendication 10, dans lequel l'opération de production d'un signal de diamètre intérieur comprend la résolution simultanée de deux équations non linéaires qui expriment la grandeur du signal d'impédance en quadrature et celle du signal d'impédance en phase en fonction de $a_1$ et $\tau$, $a_1$ étant le rayon intérieur du tube et $\tau$ un facteur proportionnel au rapport de la perméabilité à la conductivité du tube.

12. Procédé selon la revendication 11, dans lequel l'opération de résolution simultanée de deux équations comprend:

a) estimation de $a_1$, rayon intérieur du tube, en supposant $\tau=0$,

b) utilisation de $a_1$ estimé pour déterminer $\tau$ à partir de la seconde équation,

c) utilisation de la nouvelle valeur de $\tau$ dans la première équation pour déterminer une estimation améliorée de $a_1$, et

d) répétition des opérations b et c jusqu'à ce que les valeurs de $\tau$ et de $a_1$ convergent.

13. Procédé selon l'une des revendications 10 à 12, comprenant en outre les opérations suivantes: déplacement axial d'un seul bloc de la bobine émettrice et de la bobine réceptrice dans le tube, enregistrement du signal de diamètre intérieur en fonction de la distance le long du tube, et enregistrement d'un signal proportionnel au rapport de la perméabilité à la conductivité en fonction de la distance le long du tube.

11

0 112 248

FIG.1

FIG.2

FIG.3

100 — 65.5 KHz OSCILLATOR

101

102

50 60 20

106

105 — RECTIFIER

104

103

V REF.

115

110 — PHASE LOCKED LOOP OSCILLATOR

112 111

S

113

131 — 1.1 KHz LPF

130 — PSD

122 — 65.5 KHz BPF

121 — DIFF. AMP.

120 — SWITCH NETWORK

116

*FIG.4A*

UNCORRECTED CALIPER

o ALUMINUM

o STAINLESS STEEL

o BRASS

CASING APPARENT I.D. (INCHES = 25,4 mm)

CASING TRUE I.D. (INCHES = 25,4 mm)

*FIG.4B*

CORRECTED CALIPER
(FIRST ORDER)

ALUMINUM

STAINLESS STEEL

BRASS

CASING APPARENT I.D. (INCHES = 25,4 mm)

CASING TRUE I.D. (INCHES = 25,4 mm)

FIG. 5

CALIPER CORRECTION COMPARISONS

FIRST ORDER CORRECTION

SECOND ORDER CORRECTION

(REVERSION OF SERIES METHOD)

SMALL SONDE

CASING INSIDE DIAMETER ERROR (INCHES = 25.4 mm)

$\mu_R/\sigma \times 10^6$

CASING I.D. 4,5,6,7 (INCHES = 25.4 mm)

0 112 248